# FASCICULE DE BREVET EUROPEEN

(11) **EP 1 235 020 B1**
(45) Date de publication et mention de la délivrance du brevet: **28.03.2007**
(21) Numéro de dépôt: 02290360.3
(22) Date de dépôt: 14.02.2002
(51) Int. Cl.: F16L 23/032, F01N 7/18

(54) **Brides d'échappement minces galbées**
Dünne, gekrümmte Flansche für Auspuffanlagen
Thin, curved flanges for exhaust systems

(30) Priorité: 22.02.2001 FR 0102374
(43) Date de publication de la demande: 28.08.2002
(73) Titulaire: Renault s.a.s., 92100 Boulogne Billancourt (FR)
(72) Inventeur: Lefebvre, Lionel, 78280 Guyancourt (FR); Thillier, Nicolas, 78000 Versailles (FR); Devaux, Bertrand, 78960 Voisins le Bretonneux (FR)

(56) Documents cités:
- DE-A- 3 841 529
- DE-C- 837 345
- DE-U- 29 904 934

## Description

L'invention concerne un nouveau type de brides d'échappement.

La liaison entre le collecteur d'échappement d'un moteur et la descente d'échappement est constituée globalement de trois pièces : une bride côté moteur, un joint d'étanchéité, une bride côté ligne.

Deux genres de brides sont actuellement utilisés : les brides deux points et les brides trois points. Toutes ces brides présentent une face d'appui plane et sont pratiquement indéformables, étant réalisées en acier forgé ou en tôle découpée et ayant une forte épaisseur (7 à 8 mm). Le choix de la forte épaisseur est basé sur le raisonnement qu'écraser un joint entre deux pièces très raides (car épaisses) et planes permet d'assurer de manière certaine l'étanchéité. Le fort dimensionnement des pièces permet aussi d'avoir un relatif optimisme vis-à-vis de l'endurance de la liaison. De telles brides sont présentées par exemple dans le document DE 3841529 A1.

Ces brides présentent des inconvénients. En effet, la totalité de l'effort de serrage de la liaison passe par le joint, qui, de ce fait, crée une réaction importante sur les brides, et notamment sur la zone en contact étanche avec le joint.

De plus, les défauts de planéité des pièces (sur pièces nues ou inhérents aux contraintes thermiques provoquées par la soudure des tubulures) ne sont pas corrigés mais s'additionnent pour aggraver dans certaines zones les réactions sur les brides. L'existence de ces défauts de planéité entraîne des opérations de reprise sur les pièces pour garantir une bonne planéité des zones d'appui du joint sur les brides.

Enfin, ces brides sont lourdes et, conséquemment, coûteuses.

Il existe donc un besoin pour des brides d'échappement plus légères et moins coûteuses que celles actuellement utilisées.

La présente invention vise à fournir de telles brides.

Plus précisément, l'invention concerne une bride d'échappement qui comporte une zone de col délimitant une ouverture pour le passage des gaz, une zone formant portée de joint entourant la zone de col, et des moyens de serrage de la bride comportant au moins deux perçages prévus dans des zones de serrage et permettant le serrage de la bride à l'aide de boulons ou analogues contre une contre-bride après interposition d'un joint d'étanchéité, caractérisée en ce que la bride est formée à partir d'une tôle d'acier mince d'une épaisseur de 2 à 3,5 mm, et en ce que la zone formant portée de joint présente une forme légèrement galbée.

Avantageusement, les zones de serrage sont planes (non galbées).

La forme galbée peut être de divers types. Elle peut être constituée, par exemple, d'un seul galbe sphérique ou d'une combinaison de plusieurs galbes, notamment cylindriques. La forme galbée doit être peu accentuée. A titre indicatif, la valeur de la flèche maximaie formée par la surface galbée de la zone formant portée de joint et le plan tangent au bord inférieur de la zone de col peut représenter 0,005 à 0,03 fois la dimension maximale de la bride.

La bride est réalisée à partir d'une tôle d'acier relativement mince d'une épaisseur de 2 à 3,5 mm. En dessous d'une épaisseur de 2 mm, la bride n'a pas une longévité en service suffisante et au-dessus de 3,5 mm, la bride devient trop rigide, trop lourde et trop coûteuse. De préférence, l'épaisseur est d'environ 2,5 mm.

Lorsque la bride de l'invention est serrée par boulonnage contre une contre-bride, d'un type analogue à ou différent de ladite bride, avec interposition d'un joint d'étanchéité, la partie galbée est soumise à des contraintes de compression variant localement en fonction des irrégularités de surface de la contre-bride et du joint, et se déforme selon le besoin, assurant ainsi une excellente étanchéité en toutes circonstances.

La description qui va suivre, faite en se référant aux dessins annexés, fera bien comprendre l'invention.
La figure 1 est une vue de dessus d'une bride selon l'invention ;
les figures 2 et 3 sont des vues en coupe verticale selon les lignes II-II et III-III de la figure 1, respectivement ;
la figure 4 est une vue en coupe verticale montrant un ensemble d'une bride selon la figure 1 et d'une contre-bride assemblées avec interposition d'un joint d'étanchéité.

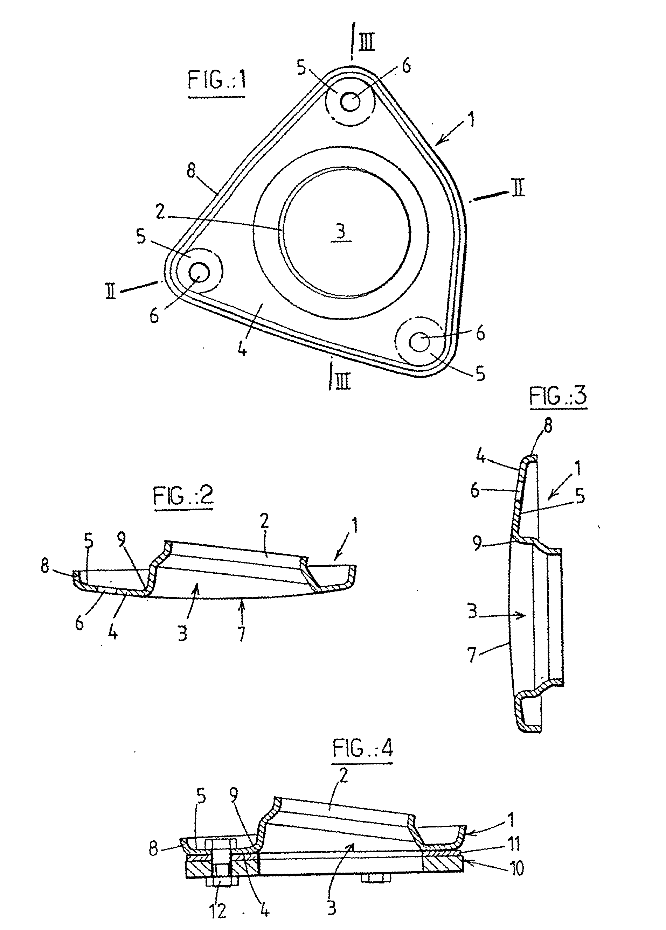

Sur les figures 1 à 3, est représentée une bride 1 présentant, en plan, une forme générale triangulaire arrondie et comportant un col 2, disposé obliquement, délimitant une ouverture 3 pour le passage des gaz, une partie principale 4 formant portée de joint entourant le col 2, et trois zones de serrage 5 comportant chacune un perçage 6. La partie principale 4 présente une forme galbée 7, qui peut correspondre à une portion de sphère comme représenté, et un rebord 8 tourné vers le haut, destiné à rigidifier la pièce. Comme on le voit bien sur la figure 1, du fait du galbe, la zone de la partie principale 4 voisine du bord 9 adjacente à l'ouverture 3 est proéminente par rapport aux zones de serrage 5, elles-mêmes voisines du rebord 8.

Les zones de serrage 5 sont planes, de forme circulaire et constituent des sortes d'îlots plans ménagés dans la partie principale au voisinage des sommets du triangle arrondi. A titre indicatif, pour une bride ayant une dimension maximale d'environ 120 mm, le rayon de la portion sphérique 7 peut être de l'ordre de 300 mm.

La figure 4 montre un assemblage d'une bride 1 avec une contre-bride 10, par exemple rigide, avec un joint d'étanchéité 11 interposé, la bride 1 et sa contre-bride 10 étant serrées l'une contre l'autre par des boulons 12 introduits dans leurs perçages après avoir amené lesdits perçages en coïncidence. Comme illustré, lors du serrage des boulons de fixation, la zone du bord 9 de la bride vient s'appliquer en premier sur le joint 11. La poursuite du serrage des boulons exerce alors un effet de levier (dont le bras est égal à la distance séparant les perçages du bord 9) produisant une déformation de la bride qui tend à presser plus fortement la zone du bord 9, que le reste de la bride, contre le joint 11.

On peut poursuivre le serrage jusqu'à ce que les zones de serrage 5 viennent à leur tour s'appliquer sur le joint (serrage maximal), sans que cela soit obligatoirement nécessaire, une bonne étanchéité pouvant déjà être obtenue par un serrage partiel.

Il va de soi que le mode de réalisation décrit et représenté n'a été donné qu'à titre d'exemple non limitatif.

## Revendications

1. Bride d'échappement formée à partir d'une tôle d'acier mince d'une épaisseur de 2 à 3,5 mm qui comporte une zone de col (2) délimitant une ouverture (3) pour le passage des gaz, une zone (4) de forme légèrement galbée formant portée de joint qui entoure la zone de col (2), et des moyens de serrage de la bride comportant au moins deux perçages (6) prévus dans les zones de serrage qui permettent le serrage de la bride à l'aide de boulons (12) ou analogues contre une contre-bride après interposition d'un joint d'étanchéité, **caractérisé en ce que** la zone formant portée de joint (4) présente un bord (9) adjacent à l'ouverture (3) proéminent par rapport aux zones de serrage (5), qui s'applique en premier contre le joint (11) lors du serrage des boulons (12), et qui est serré plus fortement contre celui-ci que le reste de la bride, du fait de la déformation de cette dernière lors de la poursuite du serrage.

2. Bride d'échappement selon la revendication 1, **caractérisée en ce que** les zones de serrage sont planes.

3. Bride selon la revendication 1, **caractérisée en ce que** le galbe est sphérique.

4. Bride selon la revendication 1 ou 3, **caractérisée en ce que** la valeur de la flèche maximale formée par la surface galbée de la zone formant portée de joint et le plan tangent au bord inférieur de la zone de col peut représenter 0,005 à 0,03 fois la dimension maximale de la bride.

5. Bride selon l'une quelconque des revendications 1 à 4, **caractérisée en ce que** l'épaisseur est d'environ 2,5 mm.

6. Bride selon la revendication 1, **caractérisée en ce que** la bride comporte un rebord (8) tourné vers le haut.

## Claims

1. Exhaust pipe flange formed from a thin steel sheet with a thickness of 2 to 3.5 mm, which includes a neck area (2) delimiting an opening (3) for the flow of gases, an area (4) of moderately curved shape forming a gasket seat which surrounds the neck area (2), and means of clamping the flange including at least two holes (6) formed in the clamping areas which enable the flange to be clamped by means of bolts (12) or the like against a counter-flange after the interposition of a sealing gasket, **characterized in that** the area forming the gasket seat (4) has an edge (9) adjacent to the opening (3) which protrudes beyond the clamping areas (5), which is the first part to be pressed against the gasket (11) when the bolts (12) are tightened, and which is pressed more firmly against the gasket than the rest of the flange, owing to the deformation of the latter in the course of clamping.

2. Exhaust pipe flange according to Claim 1, **characterized in that** the clamping areas are flat.

3. Flange according to Claim 1, **characterized in that** the curvature is spherical.

4. Flange according to Claim 1 or 3, **characterized in that** the value of the maximum deflection created by the curved surface of the area forming the gasket seat and the plane tangent to the lower edge of the neck area can be 0.005 to 0.03 times the maximum dimension of the flange.

5. Flange according to any one of Claims 1 to 4, **characterized in that** the thickness is approximately 2.5 mm.

6. Flange according to Claim 1, **characterized in that** the flange includes an upwardly turned rim (8).

## Patentansprüche

1. Auspuffflansch, der ausgehend von einem dünnen Stahlblech einer Stärke von 2 bis 3,5 mm geformt wird und eine Halszone (2), die eine Öffnung (3) für den Durchgang der Gase begrenzt, eine eine Dichtleiste bildende Zone (4) leicht gerundeter Form, die die Halszone (2) umgibt, und Mittel zum Festklemmen des Flansches aufweist, die mindestens zwei Bohrungen (6) aufweisen, die in den Klemmzonen vorgesehen sind und das Klemmen des Flansches mit Hilfe von Bolzen (12) oder ähnlichem gegen einen Gegenflansch nach Zwischenfügung einer Dichtung erlauben, **dadurch gekennzeichnet, dass** die eine Dichtleiste (4) bildende zone einen der Öffnung (3) benachbarten Rand (9) aufweist, der bezüglich der Klemmzonen (5) vorspringt und sich beim Festschrauben der Bolzen (12) als erster gegen die Dichtung (11) anlegt, und der aufgrund der Verformung des Flansches beim Fortsetzen des Klemmvorgangs stärker gegen diese Dichtung geklemmt wird als der Rest des Flansches.

2. Auspuffflansch nach Anspruch 1, **dadurch gekennzeichnet, dass** die Klemmzonen eben sind.

3. Flansch nach Anspruch 1, **dadurch gekennzeichnet, dass** die Rundung kugelförmig ist.

4. Flansch nach Anspruch 1 oder 3, **dadurch gekennzeichnet, dass** der Wert der maximalen Durchbiegung, die von der gerundeten Fläche der eine Dichtleiste bildenden Zone und der den unteren Rand der Halszone tangierenden Ebene gebildet wird, 0,005 bis 0,03 mal so groß wie die maximale Abmessung des Flansches sein kann.

5. Flansch nach einem der Ansprüche 1 bis 4, **dadurch gekennzeichnet, dass** die Stärke etwa 2,5 mm beträgt.

6. Flansch nach Anspruch 1, **dadurch gekennzeichnet, dass** er eine nach oben gerichtete Randleiste (8) aufweist.
